# EUROPEAN PATENT SPECIFICATION

(11) **EP 4 182 834 B1**
(45) Date of publication and mention of the grant of the patent: **09.09.2026**
(21) Application number: 21732798.0
(22) Date of filing: 17.06.2021
(51) Int. Cl.: G06V 20/69

(54) **COMPUTER IMPLEMENTED METHOD FOR ASSESSING THE GROWTH OF GERMINATIVE GROWTHS FROM GERMINATIVE UNITS**
COMPUTERIMPLEMENTIERTES VERFAHREN ZUR BEURTEILUNG DES WACHSTUMS VON KEIMWACHSTUM AUS KEIMENDEN EINHEITEN
MÉTHODE IMPLÉMENTÉE SUR UN ORDINATEUR POUR ÉVALUER LA CROISSANCE DE GERMES À PARTIR D'UNITÉS GERMINATOIRES

(30) Priority: 16.07.2020 GB 202010984
(43) Date of publication of application: 24.05.2023
(73) Proprietor: Croda International PLC, Goole East Yorkshire DN14 9AA (GB)
(72) Inventor: MAGNABOSCO, Francesca, Goole East Yorkshire DN14 9AA (GB); SEMENOV, Alexander, Vyacheslavovich, Goole East Yorkshire DN14 9AA (GB); DA SILVA, Carlos Eduardo Oliveira, Distrito Industrial de Campinas CEP 13.054-710 (BR)
(74) Representative: Karfopoulos, Alexis Theo
(86) International application number: PCT/EP2021/066495
(87) International publication number: WO 2022/012854

(56) References cited:
- WO-A1-2012/035504
- WO-A2-2016/172527

## Description

### Technical Field

The present disclosure relates to a computer implemented method for assessing the growth of germinative growths from germinative units, and is particularly, although not exclusively, concerned with image processing to determine the length of germinative growths from germinative units to assess the growth of the germinative growths.

### Background

Recently, biological products (or formulants) which are able to replace or supplement chemical pesticides have been gaining prominence. Biological formulants beneficially assure lower risk to the environment and human health, reduce chances of resistance development, lower development costs and reduce the time necessary to create a new product.

One such biological formulant is fungi. The presence of fungi spores on seeds has been shown to improve seed growth, as they act as a natural pesticide and enhance the seed development. Trichoderma is one such genus of fungi that assists in protecting the seeds on which Trichoderma spores are lodged. The growth of such spores has been monitored together with the germination of the seeds, and it has been noticed that the greater the viability of the spores, the more likely it is that the seeds on which the spores are lodged germinate. However, some chemical compounds applied to the seeds may affect the growth of the spores, thereby affecting growth of a seed on which the spores are lodged. One current method for assessing the effect of chemicals on biological formulants such as spores of fungi is the so-called viability method, or conidia germination method, which determines the percentage of viable conidia (conidia that will germinate) when exposed to a particular chemical compound. It is desirable to develop methods which are able to assess the effect of chemical compounds or products on germinative units such as spores. Documents WO 2012/035504 A1 (UNIV RAMOT [IL]; TOPMAN GIL [IL]; GEFEN AMIT [IL]) 22 March 2012 (2012-03-22) and WO 2016/172527 A2 (BD KIESTRA BV [NL]; WILES TIMOTHY M [US]) 27 October 2016 (2016-10-27) disclose methods of respectively measuring cell culture growth and microbial growth of colonies of bacteria.

### Statements of Invention

According to an aspect of the invention there is provided a computer implemented method for assessing the growth (e.g. the vigor) of germinative units, the method comprising the steps of: processing an image of a sample comprising germinative units to identify (detect) at least one germinative growth, which is a growth germinating from a germinative unit, present in the image and determine the length of the at least one identified growth; and calculating an image average length of the determined length. The processing may also comprise identifying at least one germinated germinative unit. Vigor, or growth, of the germinative units may be determined based on the average length for a sample. The average length of a growth of a germinative unit may correlate with the vigor of the germinative unit. For example, the longer the average length of a sample, the greater the vigor of that sample. The vigor may be determined based on an average length of a sample grown under particular conditions, where the average length may be compared to a (benchmark) value of length for a known vigor for a particular type of sample.

The method may further comprise performing the step of processing on a plurality of images of a sample comprising germinative units and averaging the resulting image average lengths of the plurality of images to generate a sample average length.

The identifying of growth in the image may comprise processing the image to distinguish between a background of the image and growths (objects, foreground) in the image. The growths may be distinguished from a background of the image using clustering. The growths may be distinguished from a background of the image by thresholding the image. The processing may comprise generating a binary image based on the image. The processing may comprise generating first and second binary images using different processes. The first and second binary images may be used individually or in combination to detect objects in the image.

The growths may be identified by processing the image to identify connected components in the image. The identification of growths in the image may further comprise performing morphological closing on the connected components. The connected components with an area below a threshold value may be determined to be at least one of non-germinated germinative units and contamination (e.g. soil particulates). At least one of the non-germinated germinative units and contamination may be disregarded in the calculating of the image average length. The location of germinative units may be determined by detecting generally circular regions in the image. The length of growth in the image may be determined by determining the number of pixels associated with growth and dividing the number of pixels in the growth by a width of a growth.

The method may further comprise determining the number of growths in the image based on the number of connected components. Identified growths which contact the edge of the image may be disregarded in the calculating of the image average length.

The germinative units may be spores and the growths may be germinative tubes. The germinative units may be seeds and the growths may be radicles or roots.

The method may further comprise the step of determining the effect of a chemical compound to which the germinative units have been exposed on the growth (or vigor) of the germinative units based on the image average length. For example, the vigor of germinative units may be affected by exposure to particular chemicals. Therefore, by determining the average length of germinative growths of a sample exposed to a particular chemical, the average length may be compared to a standard or benchmark value of a sample (for example, comprising the same type of germinative unit exposed to the same conditions except for exposure to the chemical), it may be possible to determine how the chemical is affecting the vigor of the germinative units based on the relative length of growths.

According to a further aspect there is provided a data processing apparatus comprising a processor configured to perform the steps of the method.

According to a further aspect there is provided a computer program comprising instructions which, when the program is executed by a computer, cause the computer to carry out the steps of the method.

According to a further aspect there is provided a computer-readable (storage) medium comprising instructions which, when executed by a computer, cause the computer to carry out the steps of the method.

Some chemical compounds may not affect the viability of germinative units directly, but they can be harmful to the vigor of germinative units, or the ability for the germinative units to germinate under sub-optimum conditions and produce germinative growths that grow at a normal rate and have no defects. The vigor may be determined using the length of the germinative growths, where the longer the germinative growths, the better the vigor.

By measuring the lengths of germinative growths (for example, the germinative tube lengths of conidia) using the methods described herein, it may be possible to determine which formulation component and/or product is best used to improve the likelihood of germinative growth survival. Furthermore, the methods described herein may offer a fast and accurate way to determine the vigor of germinative growths, and determine with greater accuracy the effect of chemical compounds on the vigor of the germinative units.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a flow diagram illustrating a method according to an example;
Figure 2 illustrates two images taken of a sample at different resolution;
Figure 3 illustrates three images selected for a sample according to an example;
Figure 4 is a flow diagram illustrating a method according to an example;
Figure 5 illustrates images showing the images generated in steps of a method according to an example;
Figure 6 illustrates original images of a sample at a magnification of x100 along with images generated in steps of a method according to an example;
Figure 7 illustrates original images of a sample at a magnification of x40 along with images generated in steps of a method according to an example; and
Figure 8 is a graph illustrating the average number of germinated germinative units and the average lengths of growths from germinative units according to an example.

### Detailed Description

The methods described herein generally relate to determining lengths of germinative growths of germinative units, e.g. units that will germinate, for example some dispersal units of fungi or plants such as spores or seeds. The determined lengths may be used to determine how a chemical (or biological formulant) will affect the growth of the germinative units. In one particular example, the germinative units may be spores of a fungus, where the length of germinative growths of the spores, which indicate the vigor of the spores (for example, the ability for the spore to germinate under sub-optimum conditions and produce germinative growths (germinative tubes) that grow at a normal rate and have no defects), may be determined. Spores may be applied to seeds, where the vigor of spores relates to the ability of spores to protect seeds (e.g. so that seeds germinate) from chemical compounds or products. By determining the length of germinative growths of the spores, for example when the spores have been exposed to particular chemical compounds or products, the likelihood that seeds on which spores are located and which are exposed to said chemical compounds or products will germinate may be determined.

In a further example, the germinative units may be seeds, where the length of germinative growths of the seeds, which indicate the vigor of the seeds, or the ability for the seed to germinate under sub-optimum conditions and produce germinative growths (radicles or roots) that grow at a normal rate and have no defects, may be determined. By determining the length of germinative growths of the seeds, for example when the seeds have been exposed to particular chemical compounds or products, the effect of chemical compounds on the germination of seeds may be determined. Thus, alternatively, the seeds themselves can be analysed using the methods described herein to determine the effect of a chemical compound on the vigor of the seeds. For example, the same methods described herein may be applied to analyse the germinative growth of radicles or roots of plants from seeds. The method may also be used to determine how well the radicles or roots of plants are growing under different growth conditions (such as temperature, amount of water etc.) by measuring the length of germinative growths of the radicles or roots.

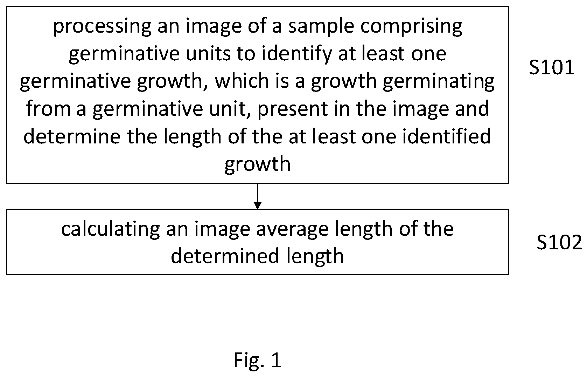

Thus, the methods described herein may generally be used to determine the vigor of germinative units. The methods described herein relate to a computer implemented method for assessing the growth, or vigor, of germinative units, the method comprising the steps of processing an image of a sample comprising germinative units to identify at least one germinative growth, which is a growth germinating from a germinative unit, present in the image and determine the length of at least one identified growth, and calculating an image average length of the at least one determined length in the image. The steps of this method are illustrated in Fig. 1, where Fig. 1 shows the steps of processing an image of a sample comprising germinative units to identify at least one germinative growth, which is a growth germinating from a germinative unit, present in the image and determine the length of at least one of the identified growth(s) S101, and calculating an image average length of the determined length S102.

The images used in this method may be images of a sample comprising germinative units from which germinative growths may be visible. For example, the images may be of spores of fungi which may have germinative tubes growing from them, or the images may be of seeds from which radicles or roots are germinating. The images used in the examples given herein are of the growth of germinative tubes from spores of fungi (in particular Trichoderma), however, it will be appreciated that these methods may equally be applied to analyse the growth of radicles or roots, and therefore images used in these methods may be of seeds with germinative growth of radicles or roots.

In the case of spores, in particular Trichoderma, samples for use in the method may be prepared by growing spores on agar plates with a dilution of 10⁻⁴ or 10⁻⁵. This dilution may reduce the likelihood of crossover or clumping of germinative growths. The incubation period of the plates may be the same for all samples so that like for like comparisons can be made. As an example, a suggested incubation period is 15 hours which may be particularly appropriate for Trichoderma. It will be appreciated that an appropriate dilution and incubation period may be selected for different types of germinative units. The samples may have been exposed to a particular chemical compound so that the effect of the chemical compound on the vigor of the germinative units may be determined.

Images may be obtained using an optical microscope with an embedded camera with high resolution. Images may be obtained at different resolutions and the methods herein performed on these images. The images herein were taken at a magnification of 40 times (x40) and 100 times (x100), however, it should be appreciated that any magnification may be used that allows the observation of germinative growth of germinative units. In particular, the magnification may differ based on the type of growth (e.g., spores may require a higher magnification than radicles or roots).

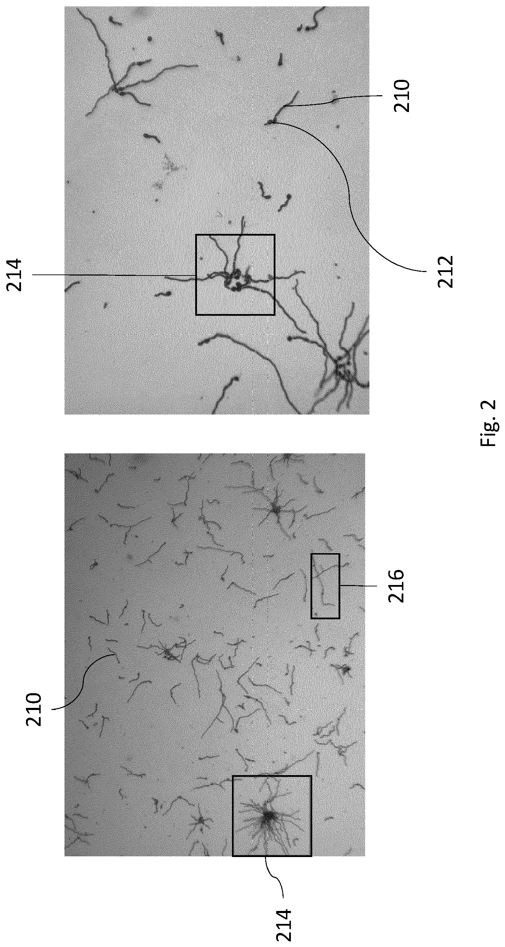

Images for use in the method may be selected on the basis of the number of clumps or crossover of germinative growths in the images. Fig. 2 illustrates two example images which each contain clumps and/or crossovers of germinative growths. For example, Fig. 2 illustrates a plurality of germinative growths 210 from spores 212, where clumps 214 of spores and an example of crossover 216 are also shown in this Figure. Clumps are regions where a plurality of spores have germinated close together, where it may be difficult to distinguish between the germinative growths of these spores, and crossover is where the germinative growths of two spores cross. In either of these cases, it may be difficult to analyse the germinative growths individually, for example to determine a length of each germinative growth. Analysis of images including many such clumps or crossover may therefore reduce the accuracy of a calculated average length of germinative growth. It may therefore be beneficial to select images which show fewer, or no, crossover and/or clumps. The images may be selected by a user.

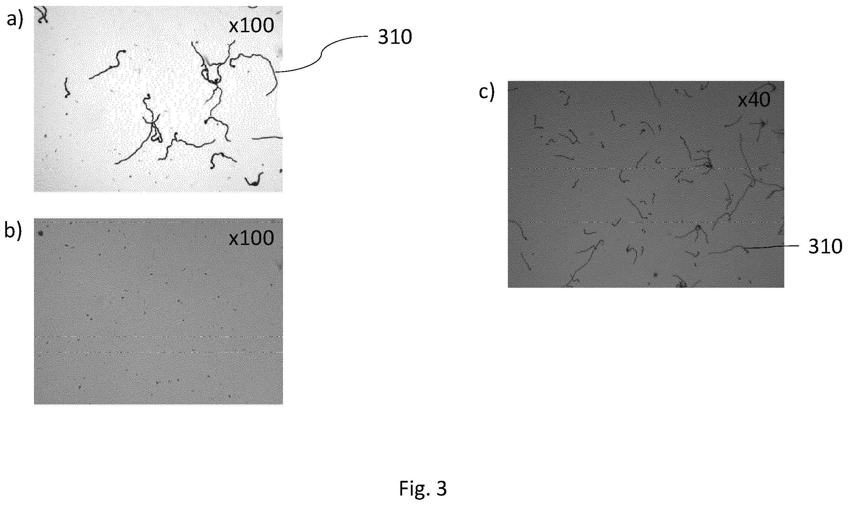

Fig. 3 illustrates three example images comprising spores of Trichoderma that may be selected for use in the method. Figs. 3a and 3b are images that have been taken of a sample at x100 magnification, and Fig. 3c is an image taken of a sample at x40 magnification. While these images are shown here as grayscale, images taken by an optical microscope may be in colour and the images that are processed in the methods described in this example are assumed to be colour images. However, it will be appreciated that grayscale images may also be used. Germinative growths 310 can be seen in Fig. 3a and 3c. However, no germinative growths are visible in Fig. 3b.

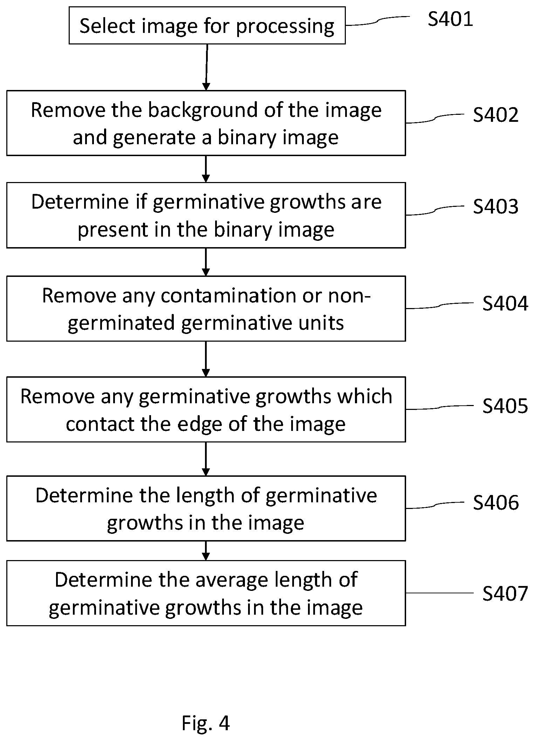

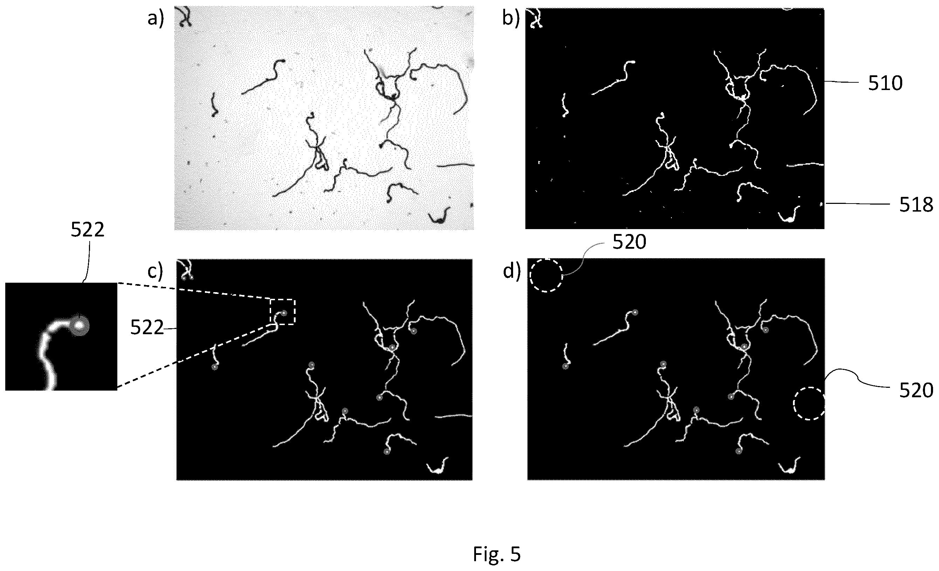

A method according to an example embodiment will now be described. Fig. 4 outlines the steps of this method. Fig. 5 illustrates images resulting from the method according to one example.

In Step 1 (corresponding to S401 in Fig. 4), an image (or a group of images, for example a folder of images) for processing is selected (an original image). In this example, the image of the sample taken at x100 shown in Fig. 3a is used for processing. This image is shown in Fig. 5a.

In Step 2 (corresponding to S402 in Fig. 4), the background of the image is removed and a binary image is returned. The returned image is shown in Fig. 5b. As can be seen in this image, the pixel values have been replaced by either a 1 or a 0 to produce a black and white representation of the image of Fig. 5a. White pixels have generally replaced pixels which indicate germinative growths, and black pixels have generally replaced the background. Thresholding may be used to generate the image, where a range of pixel values become black pixels and a further range of pixels become white pixels. In step 2, first and second binary images may be generated (not shown in Fig. 5). The first and second binary images may be generated using different image processing techniques. The first and second binary images may be used in conjunction in subsequent steps of the method to extract different information about the germinative growths in the image, or to improve the accuracy of the information extracted from each image relative to one another. First and second binary images may be generated and/or used differently depending on the magnification or the size of growths in the image. Alternatively, the second binary image may be produced during Step 3.

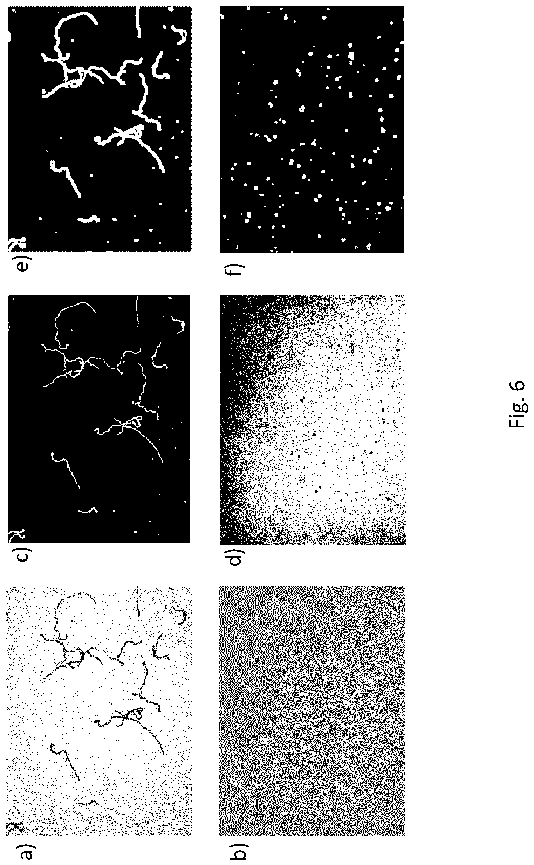

In Step 3 (corresponding to S403 in Fig. 4), it may be determined if germinative growths are present in the binary image(s). This may be achieved by determining the ratio of white pixels to black pixels in the binary image. Where the number of white pixels to black pixels exceeds a threshold value, it may be determined that germinative growths are not present in the image (see, for example, Fig. 6d where no germinative growths are present). If there are no germinative growths in the image, the image may be disregarded (for example, by assigning a null length and null number of germinated growths to images in which germinative growths were not detected). In the image used in this example, several germinative growths are present, so the image is not discarded.

In Step 4 (corresponding to S404 in Fig. 4), the remaining background (white areas of the image which are not germinative growths or germinative units) is removed. As is illustrated in Fig. 5b, the image comprises a plurality of germinative growths 510 which are generally shown as white lines, and several generally circular white components. These generally circular components 518 typically comprise contamination (for example, soil) or germinative units that have not germinated (have no germinative growths attached). These smaller, generally circular components 518 forming the remaining background can be removed from the image. For example, as the remaining background is generally comprised of small regions of white pixels, any detected components of the image which are comprised of a number of white pixels below a threshold value may be removed from the image. This method may also remove any non-germinated germinative units in the image (germinative units which have no germinative growths attached).

The location of germinative units from which growths have germinated can also be determined. For example, the image may be processed to find generally (or substantially) circular regions of pixels. In general, these generally circular regions of pixels will correspond to a germinative unit from which growths have germinated. A generally circular region may be an ellipsis, or a shape that has an uneven border which if smoothed would be circular or elliptical. The circular regions may be generally circular shaped, so will also encompass shapes such as ellipses or more irregularly shaped generally circular shapes (the method is therefore above to detect spores, which may have a circular shape, or seeds, which may have a more elliptical shape). Fig. 5c illustrates an image in which the remaining background has been removed and circles of white pixels have been detected. As can be seen in this image, each circle of white pixels has been indicated by a ring 522 surrounding each circle. Fig. 5c illustrates an enlarged portion (indicated by a dotted square) including one such ring 522. Thus, the number of germinative units that have germinative growths in the image may be determined.

In Step 5 (corresponding to S405 in Fig. 4), any germinative growths which contact the edge of the image may be removed. It is beneficial to remove growths which contact the edge as it is likely that the whole length of the growth is not visible in the image and therefore the length of the growth determined in the image would not be representative of the actual length of the growth. If these growths were to be included in the calculation of an average length of growth, the average may not be representative of the length of the growths actually present in the sample. The image may be processed to detect growths which touch the edge of the image, and then these growths may be removed from the image. The result of this process is illustrated in Fig. 5d, where by comparison with the image shown in Fig. 5c, it can be seen that germinative growths have been removed from the image (the areas from which growths have been removed indicated by the dotted circles 520).

In Step 6 (corresponding to S406 in Fig. 4), the total length of germinative growth in the image may be determined. The pixels occupied by germinative units found in Step 4 S404 may be masked and the number of remaining white pixels may be counted to determine the number of white pixels corresponding to germinative growth in the image. The width of the growths may be considered to be a constant width for a particular magnification, where the width may be predetermined (for example, a measurement of the width of a standard germinative growth in an image may be taken for a particular magnification. The average width of germinative growths at a particular magnification may be determined). The number of pixels in each germinative growth may be divided by the width in order to determine the total length of germinative growths in the image. This method may be beneficial as the length of the germinative growth is determined even if the growth is tortuous.

In Step 7 (corresponding to S407 in Fig. 4), the average length of germinative growths in the image and the number of germinated germinative units may be determined for the image. The average length of germinative growths may be determined by summing the lengths determined in Step 6 S406 and dividing by the number of germinative units corresponding to the germinative growth used to determine the total length in Step 5 S405 (the number of remaining germinative units after growths touching the edges are removed). The number of germinated germinative units is the number of germinative units determined in Step 4 S404 (including any germinative units which have germinative growths touching the edge of the image).

It will be appreciated that Steps 1-7 (S401-S407) may be repeated for a plurality of images of a sample. At least two images may be used. For example, ten images of a sample may be used in the methods described above. Thus, an average germinative growth length and number of germinated germinative units may be determined per sample by dividing the sum of the average lengths of germinative growth per image and the sum of the number of germinated germinative units per image by the number of images. Thus, a sample average germinative growth length and a sample average number of germinated germinative units may be determined. The sample averages may be used to determine the vigor of the germinative unit.

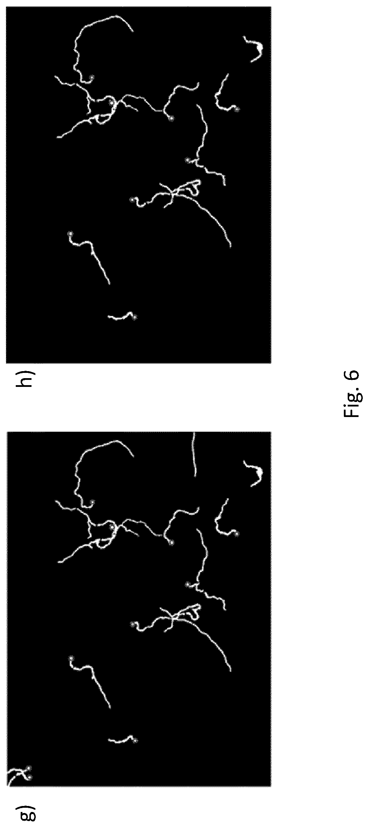

Fig. 6 illustrates images taken at x100 magnification which have been selected according to Step 1 of the method. The original images are illustrated in Figs. 6a and 6b. Figs. 6c and 6d illustrate first binary images of the images in Figs. 6a and 6b respectively which have been generated according to Step 2 of the method. Figs. 6e and 6f illustrate second binary images of the images in Figs. 6a and 6b respectively which have also been generated according to Step 2 of the method. As can be seen in this Figure, images 6a and 6b have been processed in different manners to generate two different binary images as the first and second binary images. For example, the second binary images of 6e and 6f of this example have been produced by altering the contrast of images 6a and 6b and applying a standard deviation filter before binarizing. Using these methods results in a second binary image where the growths are exaggerated and thus are more distinct in the images, which may be beneficial for future processing. In step 3 it may be determined if there are germinative growths present in the binary images. In this example, it is determined that, based on binary images 6c and 6e, there are germinative growths present in the images corresponding to 6a, but that there are no germinative growths present in the images corresponding to 6b based on binary images 6d and 6f. Therefore, the images corresponding to Fig. 6b are disregarded for the rest of the method. In Step 4, the first binary image 6c and the second binary image 6e are used to remove the remaining background from the first binary image 6c. For example, the remaining background is detected in the second binary image 6e and is then used to mask the corresponding pixels in 6c. In step 4, the location of spores from which growths have germinated are also determined, and thus the number of spores with germinative growths can be determined. Fig. 6g illustrates an image resulting from the removal of the remaining background and the locating of spores in the image. In Step 5, any germinative growths which contact the edge of the image are removed. The result of this removal is shown in 6h. Steps 6 and 7 may then be performed to determine the average length of germinative growths in the image of 6h.

In this example, the number of detected germinated spores was nine, and the average length of germinative tubes were 918.48 pixels, which equated to 192.15 µm.

The method used to generate the images shown in Fig. 6 is described in more detail below. This method may be particularly beneficial for a magnification of x100 to determine an average length of Trichoderma spores.

In Step 1, original images of a sample for analysis are selected. The images may be selected based on the number of germinative growths in the image. The images may be selected based on the distribution of the germinative growths in the image. For example, images with fewer clumps of growths relative to other images may be selected. In this example, two images are selected, corresponding to the images of Fig. 3a and Fig. 3b.

In Step 2, for each original image selected in Step 1, a first binary image is generated. The first binary image may be created by converting sRGB values of pixels in the image to values in LAB colour space. The resulting data may then be converted to single precision, and K-means clustering based image segmentation may be performed. The pixels image may be segmented into two clusters of pixels using clustering (where one cluster corresponds to pixels which define the germinative growths), where the clustering is repeated three times, as an example. The clustering may separate the background from the foreground (or objects in the image) even when the image quality is low (for example, due to regions in the image that should be the same shade appearing to be darker or lighter than one another). The segmented image may then be binarized using a binarizing function to generate a first binary image. For example, a first binary image may be created by replacing all pixel values above a globally determined threshold with 0 (black) and those pixel values below the threshold with 1 (white). Thus, pixels thresholded as corresponding to germinative growths may be white pixels, and pixels thresholded as not corresponding to germinative growths may be black pixels. A method such as Otsu's method may be used to determine the threshold values, where in Otsu's method the threshold value is chosen to minimise the intraclass variance of the thresholded black and white pixels.

In Step 3, preliminary computations may be performed to determine whether germinative growths are present in the image. In particular, a histogram of the pixel values in the first binary image created in Step 2 may be generated. The number of black pixels and white pixels may be determined. The ratio of white pixels to black pixels may be calculated on the basis of the determined number of black and white pixels.

If the calculated ratio is greater than a first threshold value, for example, greater than 10, a complement of the first binary image, where the values of the pixels are reversed (where black and white of the image are reversed), may be generated. The number of black pixels and white pixels of the complemented binary image may then be determined, and a new ratio of the white pixels to the black pixels may be calculated. The ratio of black pixels to white pixels will depend on the contrast of the image. Where an image is too dark (where the number of back pixels will be high relative to white pixels), the binarization may assign a value of 1 to the background and 0 to the objects in the image, rather than assigning a value of 1 to the objects in the image and a value of 0 to the background. In this case, the complement of the first binary image may be taken to reverse the 0s and 1s so that the objects have a value of 1 and the background has a value of 0.

If the calculated ratio, or the newly calculated ratio where the calculated ratio was greater than the first threshold value, is greater than the second threshold value, it is determined that there are no germinative units in the image. For example, if there are a larger number of white pixels than black pixels, it may be determined that there are no germinated germinative units in the image. In this case, the image is assigned 0 for average length and 0 for number of germinated germinative units. The original image may be processed to detect non germinated germinative units. In particular, the image may be processed by converting sRGB values of pixels in the original image to a grayscale image. Non germinated germinative units may be more easily detected in a grayscale image.

If the calculated ratio, or the newly calculated ratio where the calculated ratio was greater than the first threshold value, is less than a second threshold value, for example, less than 0.1, a second binary image may be created from the original image. The second binary image may be created by converting sRGB values of pixels in the original image to a grayscale image. The image intensity values are then adjusted, for example by saturating the bottom 1% and the top 1% of all pixel values to increase the contrast. A standard deviation filter is applied so that the value of each output pixel is the standard deviation of a neighborhood around the corresponding input pixel. The neighbourhood may be, for example, an n-by-n matrix of ones, for example, where n is 25. For pixels on the borders of the image, symmetric padding may be used. In symmetric padding, the values of padding pixels are a mirror reflection of the border pixels in the image. The image may then be processed to produce a complement of the image. The complement of the image may then be binarized. The binarization may involve converting the image to greyscale and using adaptive thresholding with a sensitivity factor, for example, a sensitivity factor of 0.7. The resulting image may then be processed to produce a complement of the image. The complemented image may be the second binary image.

If the calculated ratio, or the newly calculated ratio where the calculated ratio was greater than the first threshold value, is less than a second threshold value, the method may proceed to Step 4.

In Step 4, the second binary image may be processed to find connected components in the second binary image which thereby form individual objects (e.g. germinative growths), for example, pixels adjacent to pixels with the same value are likely to be the same object. Pixels may be considered to be connected if their edges touch (known as 4-connected (or connectivity)). In this case, two adjoining pixels are part of the same object if they are both on and are connected along the horizontal or vertical direction. Alternatively, pixels may be considered to be connected if their edges or corners touch. In this case, two adjoining pixels are part of the same object if they are both on and are connected along the horizontal, vertical, or diagonal direction (also known as 8-connected). In this example, 4-connected is used. 4-connected may be advantageous in preventing objects that are close to one another being determined to be the same object.

The number of objects detected in the secondary binary image may be determined. The properties, such as the shape measurements and the pixel value measurements, may also be computed for the objects of the second binary image. The information on the shape and size of the detected objects may be used to remove from the images any non-germinated germinative units or contamination (contamination in this context refers to any object present in the image which is not a germinative unit or a germinative growth, for example, soil particulates may be present as contamination in the image). In particular, objects detected in the second binary image which have an area of less than or equal to a threshold value may be removed from the first binary image. For example, where the area of an object is less than or equal to 2000 pixels, it can be assumed that the object is either a non-germinated germinative unit, or is contamination in the sample. As these objects are not of interest, they may be removed from the first binary image. Non-germinated germinative units and contamination may also be removed from the first binary image by finding circular objects, or objects which are substantially circular but with an eccentricity below a threshold value. Thus, small germinative tubes which may appear to be circular but have an eccentricity greater than a threshold value may not be deleted from the binary image while small substantially circular objects may be deleted.

The first binary image may also be processed to find connected components in the same way as for the second binary image. The first binary image is processed after the objects detected in relation to the second binary image (non-germinated germinative units and contamination) have been removed from the first binary image. Thus, the first binary image may also be processed to determine the number of objects detected in the first binary image, and the shape measurements and the pixel value measurements may also be computed for the objects of the first binary image as discussed above. The first binary image may also be processed to determine if there are any non-germinated germinative units or contamination remaining in the first binary image. For example, where the area of an object is less than or equal to 300 pixels, it can be assumed that the object is either a non-germinated germinative unit, or is contamination in the sample. As these objects are not of interest, they may be removed from the first binary image.

A location of a germinative unit from which a growth has germinated may be detected in the first binary image. The germinative unit may be located by detecting circles, for example by using a function that uses Hough transforms to detect circles. The location of the centres of the circles may also be determined. The germinative units may be detected by detecting circles with a radius within a range, for example, 11 and 20 pixels, and using adaptive thresholding with a sensitivity factor (to allow for some eccentricity in the shape of the circle), for example, a sensitivity factor of 0.9. The positions of the detected circles may be stored in an array with a number of columns and rows corresponding to the pixels of the first binary image. It may then be determined if all the pixels within the defined circle have the same pixel value (for example, are all white pixels). If the pixels within the circle all have the same value (for example a value of 1), it is determined that the circle corresponds to a germinative unit. A mask of the pixels corresponding to the germinative unit may be created.

The detection of germinative units may be repeated by performing the same steps but altering the range in which a radius of a circle can fall. For example, in a subsequent step, circles with a radius in a range of between 14 to 25 pixels may be detected. This step may allow more circles to be found with better correspondence with germinative units present in the image. The circles detected in this step may be compared to those determined in the previous step, where any duplicate circle may be discarded.

In Step 5, any growths which are touching the edge of the image are then removed from the image. It is advantageous to remove growths which connect with the border as it is likely that at least a portion of the growth is not present in the image, and therefore the length which could be determined from the image is not representative of the actual length of the growth in the sample. This therefore avoids an average value of growth length in an image being skewed by determined growth lengths being unrepresentative of actual growth lengths.

The structures touching the edge of the image may be removed by suppressing structures that are lighter than their surroundings and connected to the image border. This method may use 8 connectivity to generate a cleaned image from the second binary image where the structures connected to the image border have been removed. The cleaned image may then be subtracted from the second binary image, and the image regions and holes in the second binary image may be filled to create a mask (where a hole is a set of background pixels that cannot be reached by filling in the background from the edge of the image). As any growths touching the edge will have a pixel value the same as the border, any growths touching the border will be filled.

The mask may be applied to the first binary image, and a cleaned image from the first binary image where the structures connected to the image border have been removed may then be produced in the same manner as above. The number of white pixels in the cleaned first binary image may be determined and compared to a threshold value, where if the number of white pixels is less than a threshold value, for example 0.3 times the number of white pixels in the first binary image before the borders are cleared, then the first binary image reverts to the first binary image prior to step 5. Thus, if too many pixels have been removed, everything is kept. It may thus be determined if the number of pixels removed is too high, where if too many pixels have been removed, everything may be kept.

Any remaining germinative units may then be detected using the methods described above, where the method may be repeated for different ranges of radius of detected pixels. Pixels corresponding to germinative units may be masked in the first binary image. Any duplicate detected germinative units may be discarded.

In Step 6, the number of detected germinated germinative units may be determined using the number of germinative units detected in Step 4. The length of the germinative growths in the image may be determined. For example, the pixels occupied by germinative units may be masked and the number of remaining white pixels may be counted to determine the number of pixels making up the germinative growth in the image. Thus, the number of pixels making up the area of germinative growth may be determined. It may be assumed that the germinative growths have a constant width for a particular magnification, where the width may be determined by measuring the number of pixels across the width of a growth for a particular magnification. In this example, the average growth width may be 15 pixels.

The total length of growths in the image may then be determined by dividing the number of pixels of the growth by the growth width. This method allows the determination of the full length of the growth in the image even if the length of the growth is tortuous.

In Step 7, the average length of germinative growths in the image may be determined for the image. The average length of germinative growths may be determined by summing the lengths determined in Step 6 and dividing by the number of germinated germinative units determined in Step 5 (the number of remaining germinative units after growths touching the edges are removed). The number of germinated germinative units is the number of germinative units determined in Step 4.

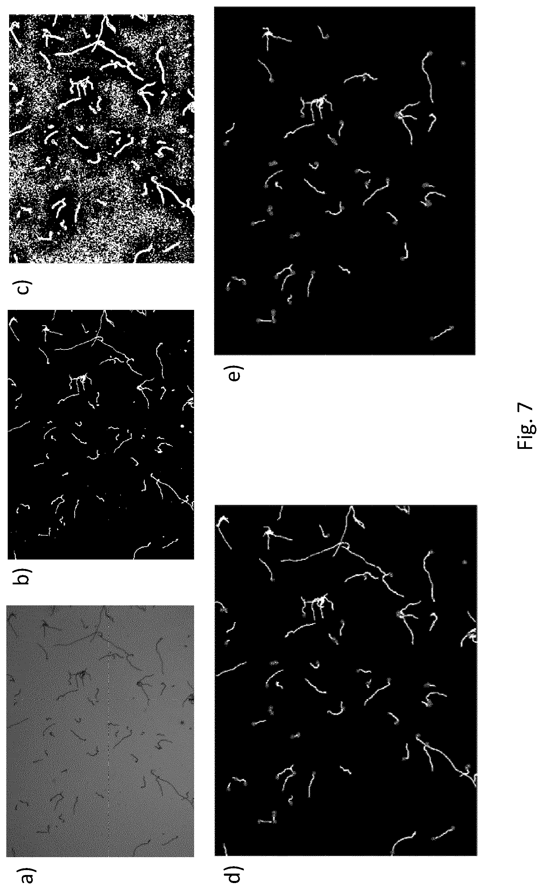

Fig. 7 illustrates images taken at x40 magnification which have been selected according to Step 1 of the method. The original image is illustrated in Fig. 7a. Fig. 7b illustrates a first binary image of the image of Fig. 7a which has been generated according to Step 2 of the method. Fig. 7c illustrates a second binary image of the image of Fig. 7a which has also been generated according to Step 2 of the method. As can be seen in this Figure, the image of Fig 7a has been processed in different manners to generate two different binary images as the first and second binary images as is described above. In Step 3 it may be determined if there are germinative growths present in the binary images. In this example, it is determined that, based on binary images shown in Fig. 7b and 7c, there are germinative growths present in the images corresponding to Fig. 7a. In Step 4, the first binary image 7b and the second binary image 7c are used to remove the remaining background from the first binary image 7b. In Step 4, the location of spores from which growths have germinated are also determined, and thus the number of spores with germinative growths can be determined. Fig. 7d illustrates an image resulting from the removal of the remaining background and the locating of spores in the image. In Step 5, any germinative growths which contact the edge of the image are removed. The result of this removal is shown in Fig. 7e. Steps 6 and 7 are then performed to determine the average length of germinative growths in the image of 7e.

In this example, the number of detected germinated spores was 46, and the average length of germinative tubes were 279.6 pixels, which equated to 137.37 µm.

The sample average germinative growth length and the sample average number of germinated units may then be used to determine the vigor (or relative vigor) of the germinative units (where the vigor correlates with the length of the germinative growths). The effect of chemical compounds on the growth of the spores may be determined, for example by comparing the sample average lengths of various samples which have been exposed to different chemical compounds, or to a standard value of length with germinative units exposed to standard conditions.

The method used to generate the images shown in Fig. 7 is described in more detail below. This method may be particularly beneficial for a magnification of x40 to determine an average length of Trichoderma spores.

In Step 1, an original image (or a plurality of images) of a sample for analysis is selected. The image may be selected based on the number of germinative growths in the image. The images may be selected based on the distribution of the germinative growths in the image. For example, images with fewer clumps of growths relative to other images may be selected. In this example, the image corresponding to the image of Fig. 3c is selected.

In Step 2, for the original image selected in Step 1, a first binary image is created. Contrary to the method described above in relation to 100x magnification, in this example, the first binary image may be created by converting sRGB values of pixels in the image to grayscale. Morphological closing may be performed on the grayscale image to generate a morphological close image. The morphological close operation is a dilation followed by an erosion, using the same structuring element for both operations. Morphological closing may result in an image where gaps in the image are filled. In this example, a disk-shaped structuring element may be used with a radius of 25 pixels. This method may be particularly advantageous where the growths in the image are relatively small, particularly where one growth may appear to be two separate growths due to lack of resolution.

The grayscale image may be taken from the morphological close image. The resulting image may then be processed to generate a complement of the image. In the complement of a grayscale image, each pixel value is subtracted from the maximum pixel value supported by the class (or 1.0 for double-precision images). The complemented image is then binarized, where the complement of the binarized image is the first binary image.

For the original image, a second binary image may be created. The second binary image may be created by converting sRGB values of pixels in the original image to a grayscale image. The image intensity values are then adjusted, for example by saturating the bottom 1% and the top 1% of all pixel values to increase the contrast. A standard deviation filter is applied so that the value of each output pixel is the standard deviation of a neighbourhood around the corresponding input pixel. The neighbourhood may be, for example, an n-by-n matrix of ones, for example, where n is 9. For pixels on the borders of the image, symmetric padding may be used. In symmetric padding, the values of padding pixels are a mirror reflection of the border pixels in the image. The image may then be processed to produce a complement of the image. The complement of the image may then be binarized. The binarization may involve converting the image to grayscale and using adaptive thresholding with a sensitivity factor, for example, a sensitivity factor of 0.6. The resulting image may be the second binary image.

In Step 3, preliminary computations may be performed to determine whether germinative growths are present in the image. In particular, a histogram of the pixel values in the second binary image created in Step 2 may be generated. The number of black pixels and white pixels may be determined. The ratio of white pixels to black pixels may be calculated on the basis of the determined number of black and white pixels.

If the calculated ratio is greater than a first threshold value, for example, greater than 50, a complement of the second binary image may be generated. The number of black pixels and white pixels of the complemented binary image may then be determined, and a new ratio of the white pixels to the black pixels may be calculated. The ratio of black pixels to white pixels will depend on the contrast of the image. Where an image is too dark (where the number of back pixels will be high relative to white pixels), the binarization may assign a value of 1 to the background and 0 to the objects in the image, rather than assigning a value of 1 to the objects in the image and a value of 0 to the background. In this case, the complement of the first binary image may be taken to reverse the 0s and 1s.

If the calculated ratio, or the newly calculated ratio where the calculated ratio was greater than the first threshold value, is greater than the second threshold value, it is determined that there are no germinative units in the image. For example, if there are a larger number of white pixels than black pixels, it may be determined that there are no germinated germinative units in the image. In this case, the image is assigned 0 for average length and 0 for number of germinated germinative units. The original image may be processed to detect non germinated germinative units. Non germinated germinative units may be more easily detected in a grayscale image.

If the calculated ratio, or the newly calculated ratio where the calculated ratio was greater than than a first threshold value, is less than a second threshold value, for example, less than 0.5, Step 4 is performed.

In Step 4, the second binary image may be processed to find connected components in the second binary image which thereby form individual objects as discussed above. 4-connectivity is used in this example.

The number of objects detected in the secondary binary image may be determined. The properties, such as the shape measurements and the pixel value measurements, of the objects may also be determined for the objects of the second binary image. The information on the shape and size of the detected objects may be used to remove from the images any germinative units or contamination. In particular, objects detected in the second binary image which have an area of less than or equal to a threshold value may be removed from the first binary image. For example, where the area of an object is less than or equal to 1000 pixels, it can be assumed that the object is either a non-germinated germinative unit, or is contamination in the sample. As these objects are not of interest, they may be removed from the first binary image. Non-germinated germinative units and contamination may also be removed from the first binary image by finding circular objects, or objects which are substantially circular but with an eccentricity below a threshold value. Thus, small germinative tubes which may appear to be circular but have an eccentricity greater than a threshold value may not be deleted from the binary image while small substantially circular objects may be deleted.

The first binary image may then also be processed to find connected components in the same way as for the second binary image. The first binary image is processed after the objects detected in relation to the second binary image (non-germinated germinative units and contamination) have been removed from the first binary image. Thus, the first binary image may also be processed to determine the number of objects detected in the first binary image, and properties of the objects such as the shape measurements and the pixel value measurements may also be computed for the objects of the first binary image in the manner discussed above. The first binary image may also be processed to determine if there are any non-germinated germinative units or contamination remaining in the first binary image. For example, where the area of an object is less than or equal to 400 pixels, it can be assumed that the object is either a non-germinated germinative unit, or is contamination in the sample. As these objects are not of interest, they may be removed from the first binary image. Non-germinated germinative units and contamination may also be removed from the first binary image by finding circular objects, or objects which are substantially circular but with an eccentricity below a threshold value. Thus, small germinative tubes which may appear to be circular but have an eccentricity greater than a threshold value may not be deleted from the binary image while small substantially circular objects may be deleted.

A location of a germinative unit from which a growth has germinated may be detected from the first binary image. The germinative units may be detected by detecting circles as discussed above, with a radius within a range, for example, of 6 and 12 pixels, using adaptive thresholding with a sensitivity factor, for example, a sensitivity factor of 0.93, along with an edge threshold of 0.89, and an instruction to find all the bright circles (circles with a pixel value close to white in the image within the radius range).

Any growths which are touching the edge of the image are then removed from the image. For example, structures in the image which are lighter than their surroundings (e.g. growths) and that are connected to the image border may be removed from the image border.

The structures touching the edge of the image may be removed by suppressing structures that are lighter than their surroundings and connected to the image border. This method may use 8 connectivity to generate a cleaned image from the second binary image where the structures connected to the image border have been removed. The cleaned image may then be subtracted from the second binary image, and the image regions and holes in the second binary image may be filled to create a mask. As any growths touching the edge will have a pixel value the same as the border, any growths touching the border will be filled.

The mask may be applied to the first binary image, and a cleaned image from the first binary image where the structures connected to the image border have been removed may then be produced in the same manner as above. The number of white pixels in the cleaned first binary image may be determined and compared to a threshold value, where if the number of white pixels is less than a threshold value, for example 0.3 times the number of white pixels in the first binary image before the borders are cleared, then the first binary image reverts to the first binary image prior to step 5. Thus, if too many pixels have been removed, everything is kept.

Any remaining germinative units may then be detected using the methods described above, where the method may be repeated for different ranges of radius of detected pixels. Pixels corresponding to germinative units may be masked. Any duplicate detected germinative units may be discarded.

In Step 6, the number of detected germinated germinative units may be determined based on the number of germinative units detected in the previous step. The number of white pixels in the first binary image may be used to determine the total number of pixels making up germinative growths in the image. It may be assumed that the germinative growths have a standard width, where the width may be determined by measuring the number of pixels across the width of a growth. In this example, the average growth width may be 5 pixels. The total length of growths in the image may then be determined by dividing the total number of pixels making up the growth by the growth width.

In Step 7, the average length of germinative growths in the image may be determined for the image. The average length of germinative growths may be determined by summing the lengths determined in Step 6 and dividing by the number of germinated germinative units determined in Step 5 (the number of remaining germinative units after growths touching the edges are removed). The number of germinated germinative units is the number of germinative units determined in Step 4).

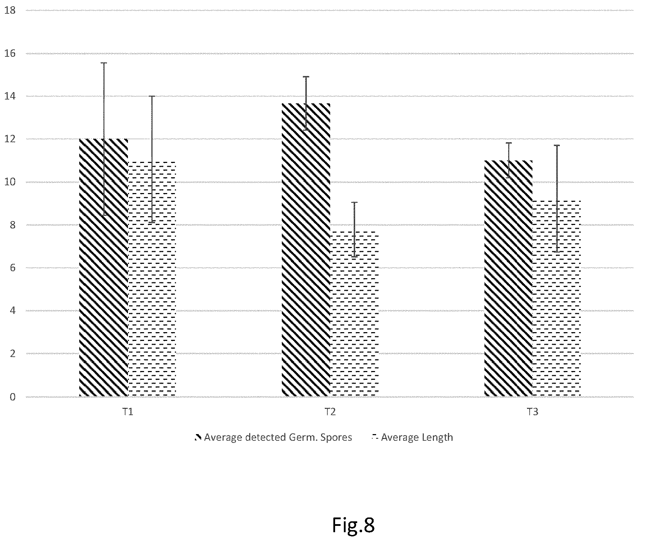

Fig. 8 is a graph illustrating the results of the above methods. In particular, Fig. 8 illustrates the average number of detected germinated spores and the average length of the germinated spores. Data was taken from three samples comprising Trichoderma spores, T1, T2 and T3, where for each sample, three images were taken through a microscope magnified 100 times (x100), where using the methods described above, the average number of detected germinated spores and the average length of germinative tubes were determined. This graph illustrates these results along with the standard deviation of the results shown as a line passing through the top of each bar. It is noted that the average number of germinated spores is computed on the basis of integer numbers (1, 2, 3, ...), hence a standard deviation of one or two units is not significant. The average lengths are continuous measures, meaning that in one unit there are infinite possible numbers. As can be seen from this Figure, the methods outlined above may consistently determine the average number of germinated germinative units and the average lengths of the germinative growths per sample.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

A computing device, such as a data storage server, may embody the present invention, and may be used to implement a method of an embodiment of the invention. The computing device may comprise a processor and memory. The computing device may also includes a network interface for communication with other computing devices, for example with other computing devices of invention embodiments.

For example, an embodiment may be composed of a network of such computing devices. The computing device may also include one or more input mechanisms such as keyboard and mouse, and a display unit such as one or more monitors. The components may be connectable to one another via a bus.

The memory may include a computer readable medium, which may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor may be is configured to control the computing device and execute processing operations, for example executing code stored in the memory to implement the methods described herein. The memory may store data being read and written by the processor. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit may display a representation of data stored by the computing device and may also display a cursor and dialog boxes and screens enabling interaction between a user and the programs and data stored on the computing device. The input mechanisms may enable a user to input data and instructions to the computing device.

The embodiments of the present disclosure and the various features and advantageous details thereof are explained more fully with reference to the non-limiting examples that are described and/or illustrated in the drawings and detailed in the description. It should be noted that the features illustrated in the drawings are not necessarily drawn to scale, and features of one embodiment may be employed with other embodiments as the skilled artisan would recognize, even if not explicitly stated herein. Descriptions of well-known components and processing techniques may be omitted so as to not unnecessarily obscure the embodiments of the present disclosure. The examples used herein are intended merely to facilitate an understanding of ways in which the embodiments of the present may be practiced and to further enable those of skill in the art to practice the same. Accordingly, the examples herein should not be construed as limiting the scope of the embodiments of the present disclosure, which is defined solely by the appended claims and applicable law.

It is understood that the embodiments of the present disclosure are not limited to the particular methodology, protocols, devices, apparatus, materials, applications, etc., described herein, as these may vary. It is also to be understood that the terminology used herein is used for the purpose of describing particular embodiments only, and is not intended to be limiting in scope of the embodiments as claimed. It must be noted that as used herein and in the appended claims, the singular forms "a," "an," and "the" include plural reference unless the context clearly dictates otherwise.

Unless defined otherwise, all technical and scientific terms used herein have the same meanings as commonly understood by one of ordinary skill in the art to which the embodiments of the present disclosure belong. Preferred methods, devices, and materials are described, although any methods and materials similar or equivalent to those described herein may be used in the practice or testing of the embodiments.

Although only a few exemplary embodiments have been described in detail above, those skilled in the art will readily appreciate that many modifications are possible in the exemplary embodiments without materially departing from the novel teachings and advantages of the embodiments of the present disclosure. The above-described embodiments of the present invention may advantageously be used independently of any other of the embodiments or in any feasible combination with one or more others of the embodiments

Accordingly, all such modifications are intended to be included within the scope of the embodiments of the present disclosure as defined in the following claims. In the claims, means-plus-function clauses are intended to cover the structures described herein as performing the recited function and not only structural equivalents, but also equivalent structures.

In addition, any reference signs placed in parentheses in one or more claims shall not be construed as limiting the claims. The word "comprising" and "comprises," and the like, does not exclude the presence of elements or steps other than those listed in any claim or the specification as a whole. The singular reference of an element does not exclude the plural references of such elements and vice-versa. One or more of the embodiments may be implemented by means of hardware comprising several distinct elements. In a device or apparatus claim enumerating several means, several of these means may be embodied by one and the same item of hardware. The mere fact that certain measures are recited in mutually different dependent claims does not indicate that a combination of these measures cannot be used to an advantage.

## Claims

1. A computer implemented method for assessing the vigor of germinative units, the method comprising the steps of:
processing an image of a sample comprising germinative units to identify at least one germinative growth, which is a growth germinating from a germinative unit, present in the image and determine the lengths of the at least one identified germinative growth, wherein the germinative units are spores or seeds, and wherein the germinative growths are germinative tubes or radicles or roots; and
determining vigor of the germinative units by calculating an image average length of the determined lengths.

2. The computer implemented method as claimed in claim 1, wherein the method further comprises performing the step of processing on a plurality of images of a sample comprising germinative units and averaging the resulting image average lengths of the plurality of images to generate a sample average length.

3. The computer implemented method as claimed in any preceding claim, wherein:
the identifying of germinative growth in the image comprises processing the image to distinguish between a background of the image and germinative growths in the image, and optionally
the germinative growths are distinguished from a background of the image using clustering.

4. The computer implemented method as claimed in claim 3, wherein the germinative growths are distinguished from a background of the image by thresholding the image.

5. The computer implemented method as claimed in any preceding claim, wherein the processing comprises generating a binary image based on the image.

6. The computer implemented method as claimed in any preceding claim, wherein:
the germinative growths are identified by processing the image to identify connected components in the image, and optionally
the identification of germinative growths in the image further comprises performing morphological closing on the connected components.

7. The computer implemented method as claimed in claim 6, wherein:
the connected components with an area below a threshold value are determined to be at least one of non-germinated germinative units and contamination, and optionally
at least one of the non-germinated germinative units and contamination are disregarded in the calculating of the image average length.

8. The computer implemented method as claimed in any preceding claim, wherein the location of germinative units is determined by detecting generally circular regions in the image.

9. The computer implemented method as claimed in any preceding claim, wherein the lengths of germinative growths in the image are determined by determining the number of pixels associated with the germinative growth and dividing the number of pixels in the germinative growth by a width of a germinative growth.

10. The computer implemented method as claimed in any of claims 6 to 9, wherein the method further comprises determining the number of germinative growths in the image based on the number of connected components.

11. The computer implemented method as claimed in any preceding claim, wherein identified germinative growths which contact the edge of the image are disregarded in the calculating of the image average length.

12. The computer implemented method as claimed in any preceding claim, wherein the method further comprises the step of determining the effect of a chemical compound to which the germinative units have been exposed on the vigor of the germinative units based on a comparison between the image average length and a benchmark value.

13. A data processing apparatus comprising a processor configured to perform the steps of the method of any of claims 1 to 12.

14. A computer program or a computer-readable medium comprising instructions which, when executed by a computer, cause the computer to carry out the steps of the method of any of claims 1 to 12.

## Patentansprüche

1. Computerimplementiertes Verfahren zum Beurteilen der Wuchskraft von Keimungseinheiten, wobei das Verfahren die folgenden Schritte umfasst:
Verarbeitung eines Bildes einer Keimungseinheiten umfassenden Probe zum Identifizieren mindestens eines Keimauswuchses, der ein aus einer im Bild anwesendenen Keimungseinheit keimender Auswuchs ist, und Bestimmen der Längen des mindestens einen identifizierten Keimauswuchses, wobei die Keimungseinheiten Sporen oder Samen sind und wobei die Keimauswüchse auskeimende Knollen oder Wurzelkeime oder Wurzeln sind; und
Bestimmen der Wuchskraft der Keimungseinheiten durch Berechnen einer bildgemittelten Länge (Bilddurchschnittslänge) der bestimmten Längen.

2. Computerimplementiertes Verfahren nach Anspruch 1, wobei das Verfahren ferner das Durchführen des Schritts der Verarbeitung auf einer Vielzahl von Bildern einer Keimungseinheiten umfassenden Probe und das Mitteln der resultierenden bildgemittelten Längen der Vielzahl von Bildern umfasst, um eine probenmittlere Länge zu generieren.

3. Computerimplementiertes Verfahren nach einem der vorhergehenden Ansprüche, wobei:
das Identifizieren von Keimauswuchs in dem Bild die Verarbeitung des Bildes umfasst, um zwischen einem Hintergrund des Bildes und Keimauswüchsen im Bild zu unterscheiden, und optional
die Keimauswüchse mithilfe von Clustering von einem Hintergrund des Bildes unterschieden werden.

4. Computerimplementiertes Verfahren nach Anspruch 3, wobei die Keimauswüchse von einem Hintergrund des Bildes durch Schwellenwertbildung des Bildes unterschieden werden.

5. Computerimplementiertes Verfahren nach einem der vorhergehenden Ansprüche, wobei die Verarbeitung das Erstellen eines binären Bildes basierend auf dem Bild umfasst.

6. Computerimplementiertes Verfahren nach einem der vorhergehenden Ansprüche, wobei:
die Keimauswüchse durch Verarbeitung des Bildes identifiziert werden, um verbundene Komponenten in dem Bild zu identifizieren, und optional
die Identifizierung von Keimauswüchsen im Bild ferner das Durchführen eines morphologischen Schließens auf den verbundenen Komponenten umfasst.

7. Computerimplementiertes Verfahren nach Anspruch 6, wobei:
die verbundenen Komponenten mit einer Fläche unterhalb eines Schwellenwertes als mindestens eines von nicht-gekeimten Keimungseinheiten und/oder Kontamination bestimmt werden, und gegebenenfalls
bei der Berechnung der bildgemittelten Länge mindestens eines von den nicht-gekeimten Keimungseinheiten und Kontamination(en) außer Acht gelassen wird/werden.

8. Computerimplementiertes Verfahren nach einem der vorhergehenden Ansprüche, wobei der Ort von Keimungseinheiten bestimmt wird, indem allgemein kreisförmige Regionen im Bild detektiert werden.

9. Computerimplementiertes Verfahren nach einem der vorhergehenden Ansprüche, wobei die Längen von Keimauswüchsen in dem Bild durch Bestimmen der Anzahl von Pixeln, die mit dem Keimauswuchs assoziiert sind, und Dividieren der Anzahl von Pixeln im Keimauswuchs durch eine Breite eines Keimauswuchses bestimmt werden.

10. Computerimplementiertes Verfahren nach einem der Ansprüche 6 bis 9, wobei das Verfahren ferner das Bestimmen der Anzahl von Keimauswüchsen in dem Bild basierend auf der Anzahl von verbundenen Komponenten umfasst.

11. Computerimplementiertes Verfahren nach einem der vorhergehenden Ansprüche, wobei identifizierte Keimauswüchse, die den Rand des Bildes berühren, bei der Berechnung der bildgemittelten Länge außer Acht gelassen werden.

12. Computerimplementiertes Verfahren nach einem der vorhergehenden Ansprüche, wobei das Verfahren ferner den Schritt des Bestimmens der Wirkung einer chemischen Verbindung, der die Keimungseinheiten ausgesetzt wurden, auf die Wuchskraft der Keimungseinheiten basierend auf einem Vergleich zwischen der bildgemittelten Länge und einem Benchmarkwert umfasst.

13. Datenverarbeitungseinrichtung, die einen Prozessor umfasst, der dazu ausgelegt ist, die Schritte des Verfahrens nach einem der Ansprüche 1 bis 12 durchzuführen.

14. Computerprogramm oder computerlesbares Medium, das Anweisungen umfasst, die, wenn sie von einem Computer ausgeführt werden, den Computer veranlassen, die Schritte des Verfahrens nach einem der Ansprüche 1 bis 12 auszuführen.

## Revendications

1. Procédé mis en œuvre par ordinateur pour évaluer la vigueur d'unités germinatives, le procédé comprenant les étapes de :
traitement d'une image d'un échantillon comprenant des unités germinatives pour identifier au moins une croissance germinative, qui est une croissance germinative à partir d'une unité germinative, présente dans l'image et déterminer les longueurs de la ou des croissances germinatives identifiées, les unités germinatives étant des spores ou des graines, et les croissances germinatives étant des tubes germinatifs ou des radicules ou des racines ; et
détermination de la vigueur des unités germinatives par calcul d'une longueur moyenne d'image des longueurs déterminées.

2. Procédé mis en œuvre par ordinateur selon la revendication 1, le procédé comprenant en outre la réalisation de l'étape de traitement sur une pluralité d'images d'un échantillon comprenant des unités germinatives et calcul de la moyenne des longueurs moyennes d'image résultantes de la pluralité d'images pour générer une longueur moyenne d'échantillon.

3. Procédé mis en œuvre par ordinateur selon l'une quelconque des revendications précédentes, dans lequel :
l'identification de la croissance germinative dans l'image comprend le traitement de l'image pour distinguer un arrière-plan de l'image des croissances germinatives dans l'image, et facultativement
les croissances germinatives sont distinguées d'un arrière-plan de l'image par regroupement.

4. Procédé mis en œuvre par ordinateur selon la revendication 3, dans lequel les croissances germinatives sont distinguées de l'appareil-plan de l'image par seuillage de l'image.

5. Procédé mis en œuvre par ordinateur selon l'une quelconque des revendications précédentes, dans lequel le traitement comprend la génération d'une image binaire à partir de l'image.

6. Procédé mis en œuvre par ordinateur selon l'une quelconque des revendications précédentes, dans lequel :
les croissances germinatives sont identifiées par traitement de l'image pour identifier les composantes connexes dans l'image, et facultativement
l'identification de croissances germinatives dans l'image comprend en outre l'application d'une fermeture morphologique aux composantes connexes.

7. Procédé mis en œuvre par ordinateur selon la revendication 6, dans lequel :
les composantes connexes dont l'aire est inférieure à une valeur seuil sont déterminées comme étant des unités germinatives non germées et/ou une contamination, et facultativement
les unités germinatives non germées et/ou la contamination sont ignorées dans le calcul de la longueur moyenne d'image.

8. Procédé mis en œuvre par ordinateur selon l'une quelconque des revendications précédentes, dans lequel l'emplacement des unités germinatives est déterminé par détection de régions généralement circulaires dans l'image.

9. Procédé mis en œuvre par ordinateur selon l'une quelconque des revendications précédentes, dans lequel les longueurs de croissances germinatives dans l'image sont déterminées par détermination du nombre de pixels associés à la croissance germinative et division du nombre de pixels dans la croissance germinative par la largeur de la croissance germinative.

10. Procédé mis en œuvre par ordinateur selon l'une quelconque des revendications 6 à 9, le procédé comprenant en outre la détermination du nombre de croissances germinatives dans l'image sur la base du nombre de composantes connexes.

11. Procédé mis en œuvre par ordinateur selon l'une quelconque des revendications précédentes, dans lequel les croissances germinatives identifiées qui entrent en contact avec le bord de l'image sont ignorées dans le calcul de la longueur moyenne d'image.

12. Procédé mis en œuvre par ordinateur selon l'une quelconque des revendications précédentes, le procédé comprenant en outre l'étape de détermination de l'effet d'un composé chimique auquel les unités germinatives ont été exposées sur la vigueur des unités germinatives sur la base d'une comparaison de la longueur moyenne d'image à une valeur de référence.

13. Appareil de traitement de données comprenant un processeur configuré pour exécuter les étapes du procédé selon l'une quelconque des revendications 1 à 12.

14. Programme informatique ou support lisible par ordinateur comprenant des instructions qui, lorsqu'elles sont exécutées par un ordinateur, amènent l'ordinateur à exécuter les étapes du procédé selon l'une quelconque des revendications 1 à 12.
